Europäisches Patentamt

European Patent Office

Office européen des brevets

(19)

(11) Publication number: **0 212 577**
**A1**

# (12) EUROPEAN PATENT APPLICATION

(21) Application number: **86111257.1**

(22) Date of filing: **14.08.86**

(51) Int. Cl.⁴: **F 16 C 3/10**

(30) Priority: **14.08.85 JP 177567/85**

(43) Date of publication of application: **04.03.87**
**Bulletin 87/10**

(84) Designated Contracting States: **DE FR GB**

(71) Applicant: **HITACHI, LTD., 6, Kanda Surugadai 4-chome Chiyoda-ku, Tokyo 100 (JP)**
Applicant: **Yamaha Motor Co., Ltd., 2500 Shingai, Iwata-shi Shizuoka-ken (JP)**

(72) Inventor: **Sawahata, Kazuo, 8-13, Moriyamacho-3-chome, Hitachi-shi (JP)**
Inventor: **Kanamaru, Hisanobu, 3449-7, Higashiishikawa, Katsuta-shi (JP)**
Inventor: **Ogishi, Nobuo, 161-53, Toshincho, Iwata-shi (JP)**
Inventor: **Tanaka, Takashi, 85-7, Ikkanji Toyookamura, Iwata-gun Shizuoka-ken (JP)**

(74) Representative: **Patentanwälte Beetz sen. - Beetz jun. Timpe - Siegfried - Schmitt-Fumian, Steinsdorfstrasse 10, D-8000 München 22 (DE)**

(54) Crankshaft.

(57) A crankshaft including a pair of crank webs (3, 4) located in spaced juxtaposed relation, and a crank pin (5) connected between the crank webs (3, 4) for rotatably journaling a piston rod (7) at one end. A pair of openings (12, 13) for receiving opposite end portions of the crank pin (5) are formed at eccenttric points on surfaces of the crank webs (3, 4) which are opposed to each other. The crank pin (5) is formed on one end portion with an irregular surface portion (5A) having a plurality of peripherally extending rows of elevations and depressions and on the opposite end portion with a slitted surface portion (5B) having a plurality of axially extending slits. The one end portion of the crank pin is inserted in the opening (12) formed in one of the crank webs (3, 4) and pressure is applied locally to a portion of the crank web (3, 4) disposed in the vicinity of the opening to induce same to undergo plastic deformation and cause its material to flow to the irregular surface portion (5A) of the crank pin (5). The other end portion of the crank pin (5) is force-fitted in the opening formed in the other crank web (4, 3) to induce a portion of the crank web disposed in the vicinity of the opening to undergo plastic deformation and cause its material to flow to the slitted surface portion (5B) of the crank pin. Thus the crank case is bonded at opposite end portions to the crank webs in metal-to-metal plastic bond with a clamping force and a shearing force produced by the material of the crank webs (3, 4).

CRANKSHAFT

BACKGROUND OF THE INVENTION

FIELD OF THE INVENTION

This invention relates to crankshafts used with internal combustion engines, for example, and more particularly it is concerned with a crankshaft suitable for use with a center crank.

DESCRIPTION OF THE PRIOR ART

A crankshaft comprising a pair of crank webs facing each other, and a crank pin connecting the crank webs together and journalling a piston rod at one end thereof is known from JP-A-152921/83, for example. In the crankshaft referred to hereinabove, the crank pin is secured in place by fitting same in openings formed in the crank webs for receiving opposite ends of the crank pin. Thus, it would be necessary to use pins to prevent the crank pin from rotating in the openings and at the same time it would be necessary to use a bonding agent to rigidly secure the crank pin to the crank webs. Difficulties would be experienced in increasing the bonding force and bonding precision with which the crank pin is secured to the crank webs. Such difficulties might make it impossible to improve productivity. It might be possible to increase bonding precision by increasing the severity of the force fit of the crank pin in the openings by providing a

81-(B1012-02)CM1b

greater interference. However, the crank pin would undergo a high degree of deformation and would be bent greatly, making it necessary to perform machining. As a result, centering of the crankshaft would become difficult to achieve.

JP-A-152920/83 discloses another type of crankshaft in which one of the crank webs is formed as a unit with the crank pin and the crank pin is force-fitted in an opening formed in the other crank web to secure same to the crank web. With regard to the force fit, this crankshaft would encounter the same problem as described by referring to the crankshaft disclosed in JP-A-152921/83. This crankshaft would additionally encounter the problem that oil used for lubricating the parts would remain between the crank pin and crank web and would function to lubricate same during operation. This might loosen the crank pin fitted in the opening in the crank web.

## SUMMARY OF THE INVENTION

This invention has, as its object, the provision of a crankshaft which is high in precision and productivity.

The outstanding characteristic of the invention enabling the afore-said object to be accomplished is that a crank pin is mechanically connected at its opposite end portions between a pair of crank webs located in juxtapose spaced-apart relation by utilizing a metal-to-metal plastic bond created between dissimilar metals.

BRIEF DESCRIPTION OF THE DRAWINGS

Fig. 1 is a vertical sectional front view of the essential portions of the crankshaft comprising one embodiment of the invention;

Fig. 2 is a sectional view taken along the line II-II in Fig. 1;

Fig. 3 is a view, on an enlarged scale, of the crank pin shown in Fig. 1;

Fig. 4 is a side view of the crank pin shown in Fig. 3;

Fig. 5 is a sectional view, on an enlarged scale, of the essential portions of the crank pin shown in Fig. 3;

Fig. 6 is a sectional view, on an enlarged scale, of the essential portions of the crankshaft shown in Fig. 1;

Fig. 7 is a sectional view of the punch;

Fig. 8 is a front view of the crank pin; and

Fig. 9 is a fragmentary sectional view of the crankshaft, showing one of the crank webs and one of the crank journals.

DETAILED DESCRIPTION OF THE PREFERRED EMBODIMENT

A preferred embodiment of the crankshaft in conformity with the invention will now be described by referring to the accompanying drawings.

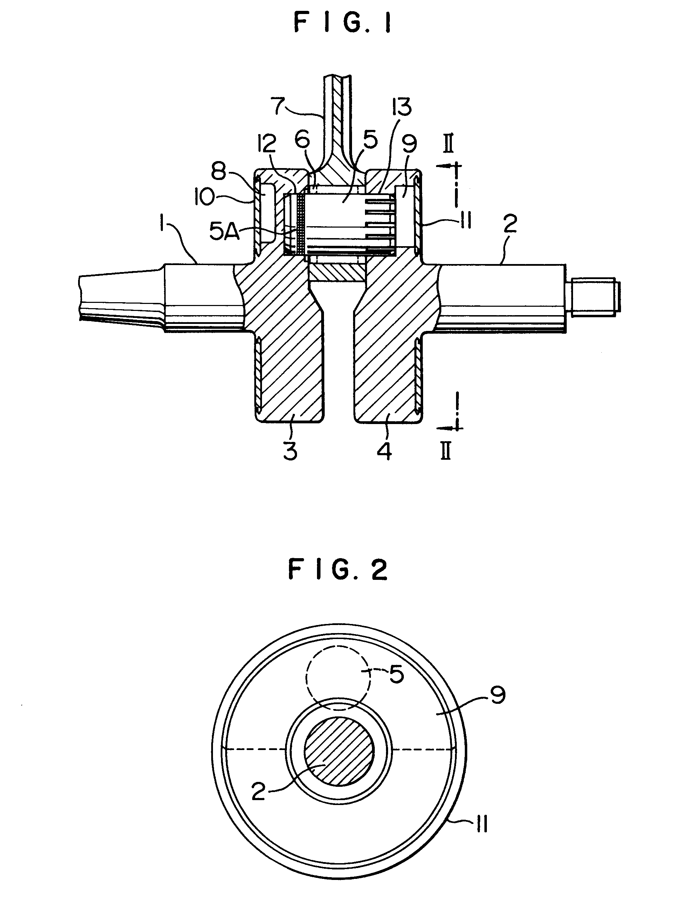

Fig. 1 is a sectional view of one embodiment of the crankshaft in conformity with the invention, in which a pair of crank journals 1 and 2 located concentrically with each other are formed integrally by casting at one end thereof with crank webs 3 and 4 of disc shape, respectively, which are located in spaced juxtaposed relation. A crank pin 5 connected at opposite end portions to the crank webs 3 and 4 at eccentric points is secured in place by means subsequently to be described and journals a piston rod 7 through a bearing metal 6.

The crank pin 5 is inserted in the crank webs 3 and 4 substantially to the middle point of their thickness, and recesses 8 and 9 of semi-circular shape are formed in the crank webs 3 and 4 in positions located at the back of the opposite ends of the crank pin 5 to achieve balance. The recesses 8 and 9 are closed at their open ends by annular lids 10 and 11 formed of steel which are located concentrically with the crank journals 1 and 2, respectively.

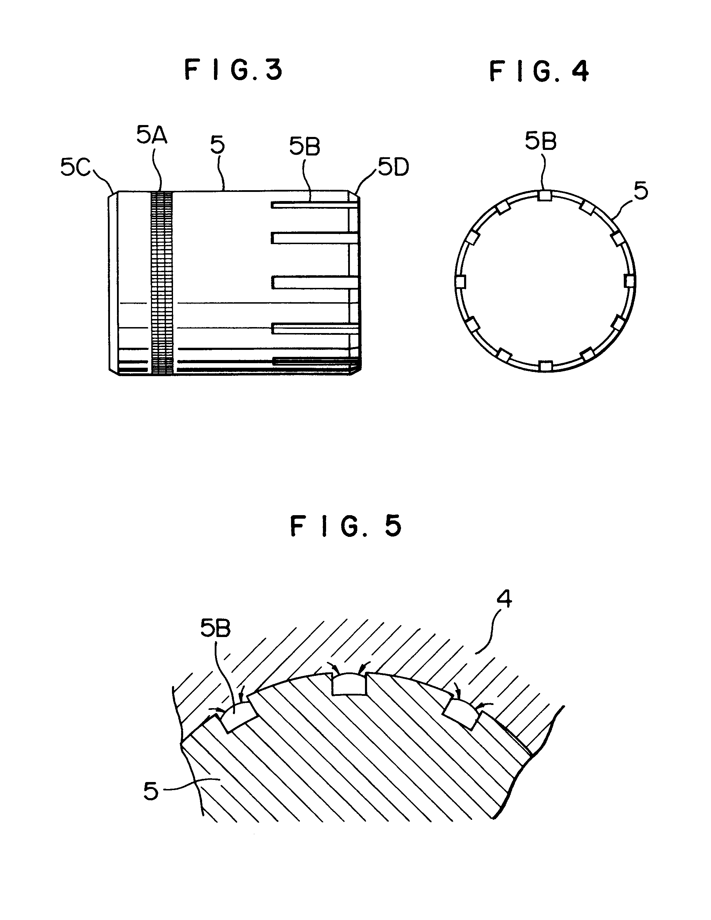

As shown in detail in Fig. 3, the crank pin 5 which is formed of iron has an irregular surface portion 5A at the outer periphery of its one end portion at which it is connected to the crank web 3, and a slitted surface portion 5B at the outer periphery of an opposite end portion at which it is connected to the crank web 4. The irregular surface portion 5A has a plurality of peripherally extending rows of elevations and depressions resembling the elevations and depressions of a file, and the slitted surface portion 5B has a plurality of axially extending slits equidistantly spaced apart from each other peripherally of the crank pin 5. The slits 5B preferably have a depth of about 0.5 mm and are dimensioned such that they are hidden behind the crank web 4 when the crank pin 5 is connected to the crank web 4. The crank pin 5 of the aforesaid construction is chamfered at its opposite ends as indicated at 5C and 5D to facilitate insertion into openings 12 and 13 formed at the crank webs 3 and 4 respectively for receiving the opposite end portions of the crank pin 5. The outer peripheral surface of the crank pin 5 is subjected to carburization quenching to increases stiffness and resistance to wear.

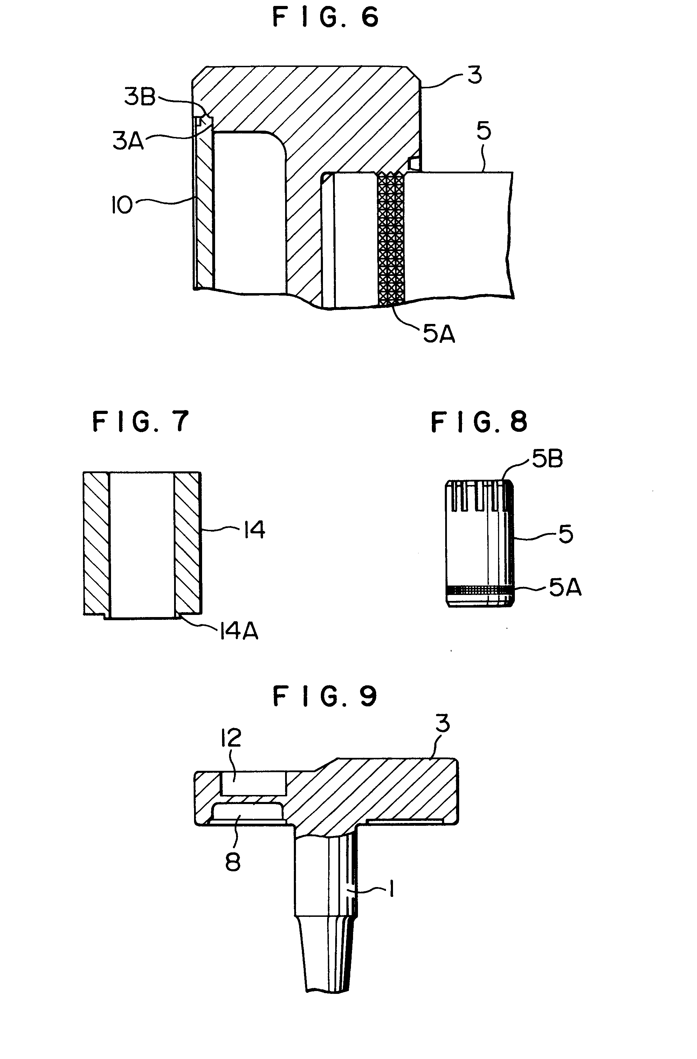

The process for connecting the crank pin 5 to the crank webs 3 and 4 will be described by referring to Figs. 7-9. First, when the end portion of the crank pin 5 formed with the irregular surface portion 5A is inserted in the poening 12 formed in the crank web 3, the crank web 3 is supported by a metal mold, not shown, in such a manner that the crank journal 1 extends downwardly, as shwon in Fig. 9, so that the crank pin 5 can be placed vertically as shown in Fig. 8. When the crank pin 5 in this position is inserted in the opening 12, the irregular surface portion 5A faces at its whole area the inner wall surface of the opening 12 formed in the crank web 3. Then, a punch 14 having teeth 14A as shown in Fig. 7 is used to apply pressure to a portion of the upper wall of the crank web 3 which surrounds the open end of the opening 12 in the position shown in Fig. 9. As shown in detail in Fig. 6, the material of the crank web 3 undergoes plastic deformation as the pressure is applied thereto so that a portion of the material flows locally in a direction perpendicular to the direction in which the pressure has been applied or toward the irregular surface portion 5A. Thus the material of the crank web 3 enters the depressions in plastic flow so that the crank pin 5 is bonded to the crank web 3 in metal-to-metal plastic bond with a clamping force of high magnitide. The crank pin 5 is bonded to the crank web 3 by causing a portion of the material of the latter to undergo plastic deformation without applying pressure to the crank pin 5 from outside. Thus the two parts can be bonded securely together while they are assembled with a high degree of precision. Then, the other end portion of the crank pin 5 formed with the slitted surface portion 5B is force-fitted in the opening 13 formed in the crank web 4, after the piston rod 7 is assembled with the crank webs 3 and 4 through the bearing metal 6. The opening 13 has a diameter which is smaller than the outer diameter of the crank pin 5 to provide an interference for force fitting the crank pin 5 therein. Thus, as the crank pin 5 is force-fitted in the opening 13, the inner peripheral surface of the crank web 4 undergoes plastic deformation and its material flows radially as indicated by arrows in Fig. 5 into the slits of the slitted surface portion 5B in the thickness ranging between 0.1 and 0.2 mm, so that the crank pin 5 is bonded to the crank web 4 in metal-to-metal plastic bond with a clamping force of high magnitude produced at the edge of each slit. The crank pin 5 is kept from being bent when its end portion having the slitted surface portion 5B is inserted in the opening 13 in the crank web 4 as described hereinabove, because the insertion is guided by the outer peripheral surface of the crank pin 5 and the pressure applied to the crank web 4 to induce same to undergo plastic deformation is absorbed by the slits of the slitted surface portion 5B, so that the crank pin 5 can be secured to the crank web 4 with a high degree of precision.

In two-cycle engines, for example, changes in the volume of the crank chamber are preferably small to obtain an improved compression ratio. To this end, the recesses 8 and 9 formed beforehand to achieve balance in design values are closed by the annular lids 10 and 11 respectively. In fitting the annular lids 10 and 11 to the recesses 8 and 9 respectively, they are placed on the respective recesses and then pressure is applied to their outer peripheral surfaces to cause same to undergo plastic deformation so that the material flows into a peripheral groove 3B formed at a stepped surface 3A on the outer peripheral side of the open ends of the recesses 8 and 9. Thereby bonding the lids 10 and 11 to the edges of the recesses 8 and 9 in metal-to-metal plastic bond. This bonding process ensures that the recesses 8 and 9 are airtightly closed and productivity is increased. If it is desired to reduce the weight of the crankshaft, the lids 10 and 11 may be formed of material of low specific gravity, such as light metal including aluminum.

In the crankshaft of the aforesaid construction, the crank pin 5 is bonded to the crank webs 3 and 4 by applying pressure to the latter to cause same to undergo plastic deformation locally without applying a bonding force of inordinately high magnitude to the openings 12 and 13 formed in the crank webs 3 and 4. This enables the crank pin 5 to be connected to the crank webs 3 and 4 with a high degree of precision. In bonding the crank pin 5 to the crank webs 3 and 4, the end portion of the crank pin 5 having the irregular surface portion 5A is first inserted in the opening 12 formed in the crank web 3 and bonded thereto by a clamping force produced near the irregular surface portion 5A, and then the opposite end portion of the crank pin 5 having the slitted surface portion 5B is force-fitted in the opening 13 formed in the crank web 4 and bonded thereto by a clamping force produced near the slitted surface portion 5B. Thus, the crank pin 5 can be connected to the crank webs 3 and 4 by applying pressure by means of a press only from one direction, thereby contributing to increased productivity.

The slits of the slitted surface portion 5B serve as grooves for releasing oil used as a lubricant when the crank pin 5 is force-fitted in the opening 13. Thus, even if the crank pin 5 expands due to a rise in temperature, the oil on the surfaces of the crank pin 5 and crank web 4 contacting each other is readily drained, having no adverse effect on the bond established between

- 9 -

0 212 577

them. The recesses 8 and 9 are closed by the lids 10 and 11 respectively, so that no influences are exerted on the compression ratio when the crankshaft is mounted in a two-cycle engine, and the engine can develop a high output power.

It will thus be appreciated that the crankshaft according to the invention is high in precision and productivity.

WHAT IS CLAIMED IS:

1.. A crankshaft for bonding between a pair of crank webs (3, 4) with a crank pin (5) supporting one end of a piston rod (7) rotatably, characterized in that

said crank pin (5) is mechanically connected with said crank webs (3, 4) by utilizing a metal-to-metal plastic bond created between dissimilar metals.

2. A crankshaft according to claim 1,

characterized in that

said pair of crank webs (3, 4) forming respective openings (12, 13) for mounting said crank pin (5) at eccentric points on surfaces of a pair of said crank webs (3, 4) opposed to each other, a crank pin (5) including an irregular surface portion (5A) having a plurality of peripherally extending concave-convex rows on an outer periphery of one end portion of said crank pin (5) and slitted surface portion (5B) having a plurality of axially extending slits on an outer periphery of the other portion of said crank pin (5), one end of said crank pin (5) fitted in said opening (12) of said crank web (3) and bonded with clamping force and shear stress by crank web member adjacent to said opening (12) deformed plastically, by biasing locally, at a peripherally of said irregular surface portion (5A) and the other end applied force fit to said opening (13) and bonded with clamping force and shear stress of said crank web member deformed plastically to be inserted into said slits (5B) at a periphery of said opening (13).

3.    A crankshaft according to claim 1 or 2, characterized in that each of said crank webs (3, 4) being disc-shaped having recesses (8, 9) for achieving a balance at a periphery of the opposed faces of said mounting faces for a crank pin (5).

4.    A crankshaft according to claim 3, characterized in that said opening end being closed by lids (10, 11).

5.    A crankshaft according to one of the claims 1 to 4, characterized in that

said irregular surface portion (5A) of said crank pin (5) being an annularly knurled surface portion formed inwardly of at least an opening end face.

6.    A crankshaft according to one of the claims 1 to 5, characterized in that

a slitted surface portion (5B) of said crank pin (5) being within the width where said crank pin (5) in applied force fit and the other end portion of the crank pin (5) being open at one end face of said crank web (4).

7.      A crankshaft according to claim 4,
characterized in that

said lids (10, 11) being annular steel plane formed
concentrically with said crank journals (1, 2) and
bonded plastically to said end surface of said crank
webs (3, 4) by deforming plastically inner and outer
peripheral edges.

8.      A crankshaft according to claim 7,
characterized in that

said lids (10, 11) being formed of aluminium.

F I G. 1

F I G. 2

F I G. 3

F I G. 4

F I G. 5

F I G. 6

3B

3A

10

3

5

5A

F I G. 7

14

14A

F I G. 8

5B

5

5A

F I G. 9

12

3

8

1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C- 542 056 (KUHN) <br> * Page 1, lines 24-29; page 2; figures 1,2 * | 1,6 | F 16 C 3/10 |
| A | | 2 | |
| A | GB-A- 135 582 (LANCHESTER) <br> * Page 3, lines 34-38; page 4; figures 1,5,6 * | 1,2,6 | |
| A | US-A-2 157 242 (MEAGHER) <br> * Page 1, right-hand column, lines 18-29; figures * | 3,4 | |
| A | FR-A- 771 794 (RENOLD AND COVENTRY CHAIN) <br> * Whole document * | 2,5 | |
| A | FR-A-2 389 796 (SUPERVIS) <br> * Whole document * | 2,5 | TECHNICAL FIELDS SEARCHED (Int. Cl.4) <br><br> F 16 C <br> F 16 D |
| A | FR-A-1 556 492 (MEFINA) <br> * Page 1, left-hand column, last paragraph; right-hand column, paragraph 1; figures * | 2,5 | |
| A | US-A-4 015 908 (ASHLEY) | | |
| | --- -/- | | |

The present search report has been drawn up for all claims

| Place of search | Date of completion of the search | Examiner |
|---|---|---|
| THE HAGUE | 20-11-1986 | ORTHLIEB CH.E. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A- 183 035 (WILSON) | | |
| A | US-A-3 747 433 (CROWE) | | |
| A | GB-A-2 029 300 (HITACHI) | | |
| A | DE-A-2 611 218 (KUGELFISCHER) | | |
| A | US-A-3 100 333 (FRIEND) | | |

TECHNICAL FIELDS SEARCHED (Int. Cl.4)

The present search report has been drawn up for all claims

| Place of search | Date of completion of the search | Examiner |
|---|---|---|
| THE HAGUE | 20-11-1986 | ORTHLIEB CH.E. |